# EUROPÄISCHE PATENTSCHRIFT

(11) **EP 1 043 647 B1**
(45) Veröffentlichungstag und Bekanntmachung des Hinweises auf die Patenterteilung: **26.07.2006**
(21) Anmeldenummer: 00106616.6
(22) Anmeldetag: 28.03.2000
(51) Int. Cl.: G05G 1/14

(54) **Pedal**
Pedal
Pédale

(30) Priorität: 03.04.1999 DE 19915280
(43) Veröffentlichungstag der Anmeldung: 11.10.2000
(73) Patentinhaber: Volkswagen Aktiengesellschaft, 38436 Wolfsburg (DE)
(72) Erfinder: Meyer, Wolfgang, 38114 Braunschweig (DE); Böttcher, Elvira, 38110 Braunschweig (DE)

(56) Entgegenhaltungen:
- DE-A- 3 427 097
- DE-A- 3 909 941
- DE-A- 4 211 640
- DE-A- 4 226 352
- US-A- 5 575 181
- DATABASE WPI Section Ch, Week 198517 Derwent Publications Ltd., London, GB; Class A17, AN 1985-102811 XP002901141 & JP 60 049035 A (DAIHATSU MOTOR CO LTD), 18. März 1985 (1985-03-18)

## Beschreibung

Die vorliegende Erfindung betrifft ein Pedal, insbesondere zur Verwendung als Gas-, Brems- oder Kupplungspedal in einem Kraftfahrzeug, gemäß dem Oberbegriff des Patentanspruches 1.

Solche Pedale, die zum Beispiel in Kraftfahrzeugen als Brems-, Kupplungs- oder Gaspedal zum Einsatz gelangen, sind unter anderem aus der EP-0,714,056 A1 oder aus der DE-OS 34 27 097 A1 bekannt.

In der EP-0,714,056 A1 ist das Pedal einteilig im Spritzgußverfahren aus einem Kunststoff hergestellt und weist im wesentlichen zwei Abschnitte auf, die über eine Zwischenwand getrennt sind. Der obere Abschnitt ist als Hohlkörper mit im wesentlichen rechteckigen Querschnitt ausgebildet, während der untere Abschnitt mit einem offenen, U-förmigen Querschnitt ausgebildet ist und Verstärkungsrippen in mehreren Ebenen aufweist. Infolge dieses komplexen Aufbaus ist die Herstellung entsprechend kompliziert und teuer.

Aus der DE-OS 34 27 097 A1 ist ein weiteres Pedal mit den Merkmalen des Oberbegriffes des Anspruchs 1 bekannt, welches im wesentlichen einen offenen Doppel-T-förmigen Querschnitt aufweist, der beidseitig durch Verstärkungsrippen in Form eines Fachwerks verstärkt ist. Bei diesem Typ von Pedal ist die Verwindungssteifigkeit problematisch.

Um bei beispielsweise gekröpft ausgeführten Pedalen eine hohe Steifigkeit, insbesondere Verwindungssteifigkeit zu erreichen, sind die bekannten Querschnitte bzw. Profilierungen und/oder Verstärkungsrippen nicht geeignet.

Gekröpfte Pedale sind infolge eines begrenzten Bauraums im Fußraum eines Kraftfahrzeuges immer häufiger anzutreffen.

Es ist daher die Aufgabe der vorliegenden Erfindung, ein Pedal zu schaffen, welches auch in gekröpfter Ausführung eine außerordentlich hohe Torsionssteifigkeit aufweist.

Erfindungsgemäß wird die Aufgabe durch die Merkmale des Patentanspruchs 1 gelöst.

Ausgehend von einem Pedal, insbesondere zur Verwendung als Gas-, Brems- oder Kupplungspedal in einem Kraftfahrzeug, mit einen im wesentlichen länglich ausgebildeten Grundkörper, der seinerseits einen unteren und einen oberen Abschnitt sowie im Querschnitt eine Profilierung und/oder eine Mehrzahl von Verstärkungsrippen aufweist, wird die Aufgabe demnach dadurch gelöst, daß Außenwandabschnitte vorgesehen sind, die in Längsrichtung des Grundkörpers derart abwechselnd auf sich gegenüberliegenden Seiten des Grundkörpers ausgebildet sind, daß die Verstärkungsrippen und die Außenwandabschnitte gemeinsame Hohlräume ausbilden, die abwechselnd in entgegengesetzter Richtung eine Öffnung zur Außenseite hin aufweisen.

Durch diese Ausbildung des Pedals wird eine hohe Torsionssteifigkeit erreicht, insbesondere auch in Bereichen die eine Kröpfung bzw. Krümmung des Pedals bilden.

Weiterbildungen eines solchen erfindungsgemäßen Pedals sind der Gegenstand von Unteransprüchen.

Die Erfindung wird nachfolgend anhand der Zeichnungen näher beschrieben, in denen die
Fig. 1 in der rechten Hälfte eine Seitenansicht einer ersten bevorzugten Ausführungsform des erfindungsgemäßen Pedals und in der linken Hälfte eine Draufsicht mit zwei eingezeichneten Querschnitten A-A und B-B darstellt;
Fig. 2 eine perspektivische Ansicht einer zweiten bevorzugten Ausführungsform zeigt; und
Fig. 3 eine weitere perspektivische Ansicht des Pedals nach der Figur 2 zeigt.

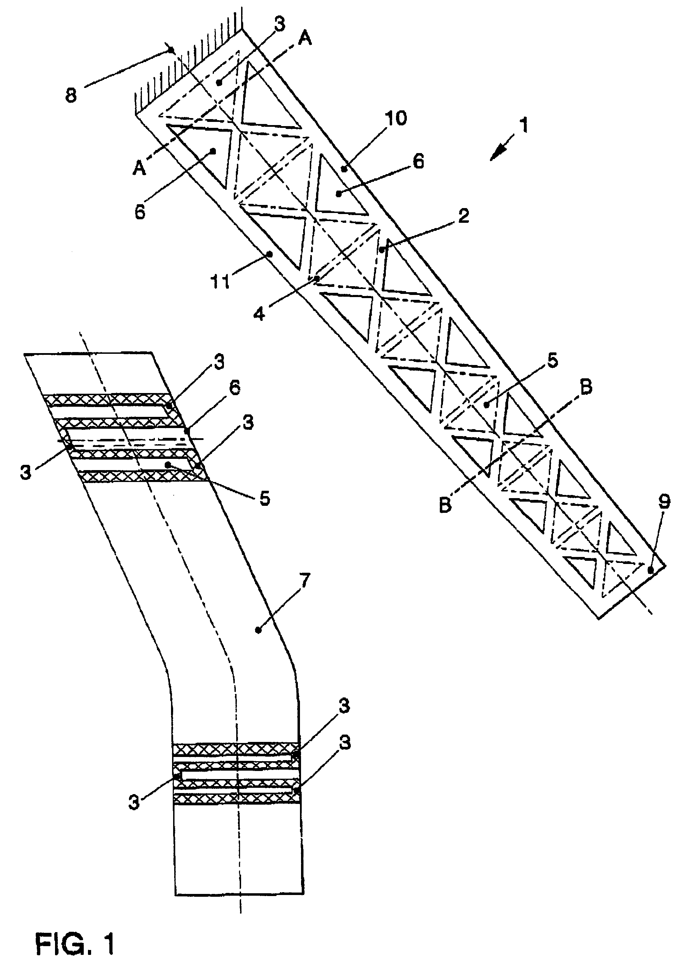

In den Zeichnungen ist in der rechten Hälfte der Figur 1 eine Seitenansicht gezeigt, die das erfindungsgemäße Pedal mit einem Grundkörper 1 darstellt, der eine im wesentlichen länglich ausgebildete Grundform hat. Am oberen Ende des Grundkörpers 1 befindet sich ein Anlenkpunkt 8, an dem das Pedal an der Karosserie eines Kraftfahrzeuges verschwenkbar befestigt ist.

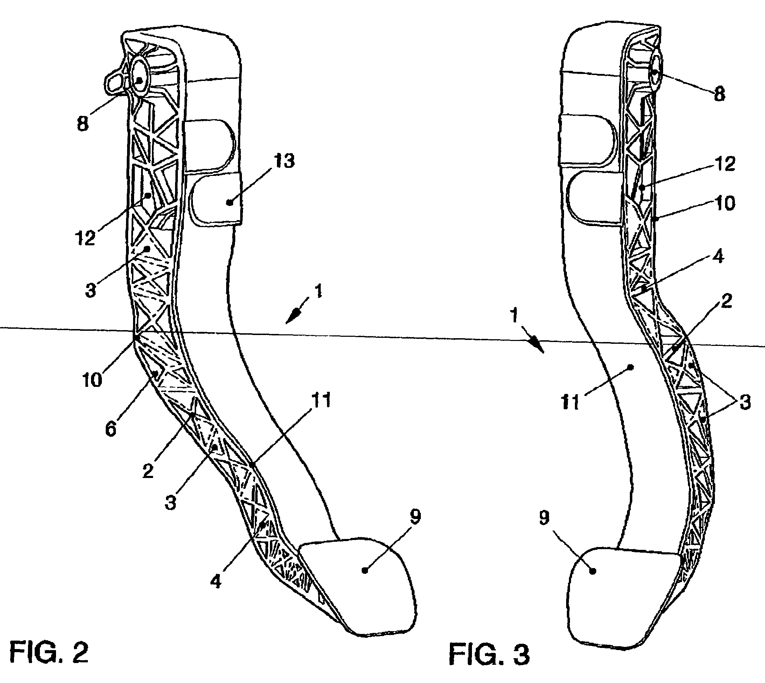

Von diesem Anlenkpunkt 8 ausgehend, verjüngt sich der Grundkörper 1 im Querschnitt, nämlich in Richtung eines Kraftangriffspunktes 9, d.h. des Punktes, an dem der Fuß eines Fahrers des Kraftfahrzeuges die Kraft zur Betätigung des Pedals aufbringt. Die entsprechende Fußauflage (siehe Figuren 2 und 3) ist in der Figur 1 nicht dargestellt.

Wie es der Darstellung in der linken Hälfte der Figur 1 zu entnehmen ist, ist das gezeigte Pedal mit einer Kröpfung 7 versehen. Vom Anlenkpunkt 8 ausgehend, verläuft das Pedal schräg nach rechts unten, um an der Kröpfung 7 senkrecht nach unten zu verlaufen, bis zum Kraftangriffspunkt 9.

Bei einem herkömmlichen Pedal, wie in der Einleitung beschrieben, würde der Bereich der Kröpfung 7 Probleme im Hinblick auf die Verwindungssteifigkeit nach sich ziehen, da die bekannten Querschnitte, Profilierungen und/oder Verstärkungsrippen nur für gerade Pedale geeignet sind.

Das erfindungsgemäße Pedal weist hingegen einen Querschnitt auf, der eine außerordentlich hohe Torsionssteifigkeit mit sich bringt, insbesondere auch in gekrümmten Bereichen des Grundkörpers 1.

Der Grundkörper 1 weist einen oberen und einen unteren Abschnitt 10 bzw. 11 auf, zwischen denen Verstärkungsrippen 2 kreuzförmig verlaufend angeordnet sind. Diese Grundstruktur wird durch Außenwandabschnitte 3 verstärkt, die abwechselnd auf der linken und auf der rechten Seite (siehe linke Hälfte der Zeichnung in der Fig. 1, Querschnitte) des Grundkörpers 1 angeordnet sind.

Eine weitere Verstärkung des Grundkörpers 1 kann durch das Vorsehen von Zwischenwänden 4 erreicht werden, die zwischen den kreuzförmig angeordneten Verstärkungsrippen 2 ausgebildet werden.

In den Querschnitten A-A und B-B ist gut zu erkennen, daß die sich ergebende Querschnittsform des Grundkörpers 1 mäanderförmig ist. Dadurch wird eine außerordentlich hohe Torsionssteifigkeit des Grundkörpers 1 erzielt.

In der Zeichnung ist mit 5 jeweils ein Hohlraum bezeichnet, der sich durch die Verstärkungsrippen 2 und durch die Außenwandabschnitte 3 ergibt, wobei dieser Hohlraum 5 jeweils eine Öffnung 6 nach außen hin aufweist. Die sich ergebenden Hohlräume 5 öffnen sich abwechselnd nach links und nach rechts, bezogen auf die linke Hälfte der Zeichnung in der Figur 1.

Die Schnittpunkte der Verstärkungsrippen 2 sind symmetrisch ausgebildet, wodurch die hohe Torsionssteifigkeit mit erreicht wird. Darüber hinaus sind die Verstärkungsrippen 2 von einer zur anderen Seite des Grundkörpers 1 durchgängig verlaufend ausgebildet, so daß keine Biegebelastung der Verstärkungsrippen 2 selbst auftritt.

Der Grundkörper 1 des Pedals wird vorzugsweise aus einem Kunststoff (Polyamid), Metall, Leichtmetall (Alu) oder einem GFK-Werkstoff in Spritzgußtechnik gefertigt.

Die Außenwandabschnitte 3 sind vorzugsweise und wie in der gezeigten Ausführungsform erläutert, direkt am Außenumfang des Grundkörpers 1 ausgebildet. Alternativ können die Außenwandabschnitte 12 (Figuren 2 und 3) auch geringfügig nach innen versetzt sein, um zum Beispiel eine andere optische Wirkung zu erzielen. Allerdings darf dieser Versatz nicht zu groß sein, um die erwünschte hohe Torsionssteifigkeit des Grundkörpers 1 zu erhalten.

Die zweite bevorzugte Ausführungsform des Pedals ist in den Figuren 2 und 3 dargestellt. Dort sind gleiche Bezugszeichen für die gleichen bzw. gleichwirkenden Bauteile verwendet wie die in der Figur 1 angegebenen Bezugszeichen.

Zudem können in einem Bereich des Pedals, der einer nur geringen Torsionsbelastung unterliegt, die Außenwandabschnitte 3 bzw. 12 ganz weggelassen werden, um beispielsweise die Werkzeugkosten niedrig zu halten. Im Falle des Pedals, welches in den Figuren 2 und 3 dargestellt ist, könnte im Bereich zwischen Anlenkpunkt 8 und den Anschlagflächen 13 diese Einsparung realisiert werden, ohne die Steifigkeit des gesamten Pedals zu beeinträchtigen.

Das erfindungsgemäße Pedal umfaßt somit einen im wesentlichen länglich ausgebildeten Grundkörper 1, der im Querschnitt eine Profilierung und/oder eine Mehrzahl von Verstärkungsrippen 2 aufweist, wobei Außenwandabschnitte 3 vorgesehen sind, die in Längsrichtung des Grundkörpers 1 abwechselnd auf sich gegenüberliegenden Seiten des Grundkörpers 1 ausgebildet sind. Durch die erfindungsgemäße Ausbildung des Pedals wird eine hohe Torsionssteifigkeit des Grundkörpers 1 erreicht, insbesondere auch in Bereichen die eine Kröpfung 7 des Pedals bilden.

### BEZUGSZEICHENLISTE

- 1: Grundkörper
- 2: Verstärkungsrippe(n)
- 3: Außenwandabschnitt(e)
- 4: Zwischenwände
- 5: Hohlraum/Hohlräume
- 6: Öffnung(en)
- 7: Kröpfung
- 8: Anlenkpunkt
- 9: Kraftangriffspunkt
- 10: oberer Abschnitt
- 11: unterer Abschnitt
- 12: Außenwandabschnitt(e)
- 13: Anlagefläche(n)

## Patentansprüche

1. Pedal, insbesondere zur Verwendung als Gas-, Brems- oder Kupplungspedal in einem Kraftfahrzeug, mit einem im wesentlichen länglich ausgebildeten Grundkörper (1), der seinerseits einen unteren und einen oberen Abschnitt (10; 11) sowie im Querschnitt eine Profilierung und/oder eine Mehrzahl von Verstärkungsrippen (2) aufweist,
**dadurch gekennzeichnet, daß**
Außenwandabschnitte (3; 12) vorgesehen sind, die in Längsrichtung des Grundkörpers (1) derart abwechselnd auf sich gegenüberliegenden Seiten des Grundkörpers (1) ausgebildet sind, dass die Verstärkungsrippen (2) und die Außenwandabschnitte (3; 12) gemeinsam Hohlräume (5) ausbilden, die abwechselnd in entgegengesetzter Richtung eine Öffnung (6) zur Außenseite hin aufweisen.

2. Pedal nach Anspruch 1, **dadurch gekennzeichnet, daß** der Grundkörper (1) im Querschnitt senkrecht zur Längsrichtung des Grundkörpers (1) ein im wesentlichen mäanderförmiges Profil aufweist.

3. Pedal nach Anspruch 1 oder 2, **dadurch gekennzeichnet, daß** die Verstärkungsrippen (2) in Form von Kreuzrippen ausgebildet sind.

4. Pedal nach einem der Ansprüche 1 bis 3, **dadurch gekennzeichnet, daß** zwischen den Verstärkungsrippen (2) jeweils Zwischenwände (4) vorgesehen sind.

5. Pedal nach einem der Ansprüche 1 bis 4, **dadurch gekennzeichnet, daß** der Grundkörper (1) aus einem Polyamid oder aus einem glasfaserverstärkten Polyamid besteht.

6. Pedal nach einem der Ansprüche 1 bis 4, **dadurch gekennzeichnet, daß** der Grundkörper (1) aus einem Metall oder aus einem Leichtmetall besteht.

7. Pedal nach einem der Ansprüche 1 bis 6, **dadurch gekennzeichnet, daß** der Grundkörper (1) eine Kröpfung (7) aufweist.

8. Pedal nach einem der Ansprüche 1 bis 7, **dadurch gekennzeichnet, daß** die Außenwandabschnitte (12) um ein vorbestimmtes geringes Ausmaß nach innen versetzt angeordnet sind.

9. Pedal nach einem der Ansprüche 1 bis 8, **dadurch gekennzeichnet, daß** sich der Grundkörper (1) von seinem Anlenkpunkt (8) in Richtung zu einem Kraftangriffspunkt (9) im Querschnitt verjüngt.

## Claims

1. Pedal, for use in particular as an accelerator, brake or clutch pedal in a motor vehicle, having a body (1) of basically elongate design, which for its part has a lower section (10) and an upper section (11) together with a cross-sectional profiling and/or a plurality of strengthening ribs (2), **characterized in that** outer wall sections (3; 12) are provided, which in the longitudinal direction of the body (1) are designed to alternate on opposite sides of the body (1) in such a way that the strengthening ribs (2) and the outer wall sections (3; 12) together form hollow spaces (5), which alternately in opposite directions have an opening (6) to the outside.

2. Pedal according to Claim 1, **characterized in that** the body (1) in cross-section perpendicular to the longitudinal direction of the body (1) has a basically meander-shaped profile.

3. Pedal according to Claim 1 or 2, **characterized in that** the strengthening ribs (2) are designed in the form of intersecting ribs.

4. Pedal according to any one of Claims 1 to 3, **characterized in that** partition walls (4) are in each case provided between the reinforcing ribs (2).

5. Pedal according to any one of Claims 1 to 4, **characterized in that** the body (1) is composed of a polyamide or a glass fibre-reinforced polyamide.

6. Pedal according to any one of Claims 1 to 4, **characterized in that** the body (1) is composed of a metal or a lightweight metal.

7. Pedal according to any one of Claims 1 to 6, **characterized in that** the body (1) has a bent offset (7).

8. Pedal according to any one of Claims 1 to 7, **characterized in that** the outer wall sections (12) are arranged offset inwards by a small predefined amount.

9. Pedal according to any one of Claims 1 to 8, **characterized in that** the body (1) in cross-section tapers from its point of articulation (8) towards a point of application (9) of a force.

## Revendications

1. Pédale, en particulier pour l'utilisation en tant que pédale d'accélérateur, de frein ou d'embrayage dans un véhicule automobile, comprenant un corps de base (1) de forme essentiellement oblongue, qui présente pour sa part une portion inférieure et une portion supérieure (10 ; 11) ainsi que dans sa section transversale, un profilage et/ou une pluralité de nervures de renforcement (2),
**caractérisée en ce que**
des portions de paroi extérieure (3 ; 12) sont prévues, lesquelles sont réalisées dans la direction longitudinale du corps de base (1) en alternance sur des côtés opposés du corps de base (1), de telle sorte que les nervures de renforcement (2) et les portions de paroi extérieure (3 ; 12) constituent ensemble des espaces creux (5) qui présentent en alternance dans la direction opposée une ouverture (6) vers le côté extérieur.

2. Pédale selon la revendication 1, **caractérisée en ce que** le corps de base (1) présente, en section transversale, perpendiculairement à la direction longitudinale du corps de base (1), un profil sensiblement en méandres.

3. Pédale selon la revendication 1 ou 2, **caractérisée en ce que** les nervures de renforcement (2) sont réalisées en forme de nervures croisées.

4. Pédale selon l'une quelconque des revendications 1 à 3, **caractérisée en ce que** des parois intermédiaires (4) sont à chaque fois prévues entre les nervures de renforcement (2).

5. Pédale selon l'une quelconque des revendications 1 à 4, **caractérisée en ce que** le corps de base (1) se compose d'un polyamide ou d'un polyamide renforcé par des fibres de verre.

6. Pédale selon l'une quelconque des revendications 1 à 4, **caractérisée en ce que** le corps de base (1) se compose d'un métal ou d'un métal léger.

7. Pédale selon l'une quelconque des revendications 1 à 6, **caractérisée en ce que** le corps de base (1) présente un coude (7).

8. Pédale selon l'une quelconque des revendications 1 à 7, **caractérisée en ce que** les portions de paroi extérieure (12) sont disposées de manière décalée vers l'intérieur d'une faible mesure prédéterminée.

9. Pédale selon l'une quelconque des revendications 1 à 8, **caractérisée en ce que** le corps de base (1) se rétrécit en section transversale depuis son point d'articulation (8) dans la direction d'un point d'application de force (9).
